# EUROPEAN PATENT APPLICATION

(11) **EP 4 792 642 A1**
(43) Date of publication of application: **19.08.2026**
(21) Application number: 25158288.8
(22) Date of filing: 17.02.2025
(51) Int. Cl.: A01G 29/00, A01G 27/04, A01G 27/06

(54) **IRRIGATION SYSTEM AND THE USE OF SUCH IRRIGATION SYSTEM**

(71) Applicant: Urban Planter LLC, Scottsdale, Arizona 85251 (US)
(72) Inventor: SPIRO, Daniel, Scottsdale, AZ 85251 (US)
(74) Representative: AWA Sweden AB

(57) **Abstract**

**The invention refers to an** irrigation system comprising an external pipe (170, 270) configured to convey irrigation fluid (108, 208) to an irrigation tank (101, 201), and a plurality of irrigation stakes (128, 129) that are configured to receive the irrigation fluid (108, 208) from the irrigation tank (170, 270) and convey the irrigation fluid t(108, 208) o soil/bedding material the vicinity of a plant root base (139). The irrigation system may be used in in a planter (113), a greenhouse or in open ground cultivation.

## Description

### Technical field

The invention refers to an irrigation system and the use of such irrigation system.

### Technical background

Common irrigation systems today rely on an extended piping system to deliver irrigation fluid to a plant root. The delivery system most often relies on controllers. The controllers control irrigation valves that flow pressurized irrigation fluid through the piping system to the plant's surroundings. The piping system can be above grade and/or below grade.

Several methods are geared to optimize the irrigation fluid delivery to the plant root while minimizing the usage of irrigation fluid. Among these methods are night irrigation that prevents daytime evaporation due to solar radiation, drip irrigation to enable the irrigation fluid to slowly percolate deep into the soil, deep root irrigation which is a targeted means to deliver irrigation fluid primarily for trees below trees' dripline, and controlled rationing of irrigation fluid based on season.

The means to deliver nutrients and protective plant health additives can also vary. Protective plant health additives are substances configured to combat viruses, bacteria, and/or other organisms that risk the health of the plants. The delivery methods can include over grade, below grade, and both over grade and below grade. Today's art often includes at least one of a nutrient and a protective plant health additive delivered to the plant's root base through the irrigation fluid.

The above grade method can include spraying and/or disposing nutrients and protective plant health additives on grade with the expectation that rainwater and/or irrigation water will deliver the substances through the ground irrigation planting material to the plant root base.

The above methods can be grouped as predictive systems that anticipate plant growth cycles under conditions perfectly isolated from the surrounding environment. Regrettably, in today's outdoor environment, weather conditions have become unpredictable. As a result, farmers worldwide experience reductions in crop yields. There is hence a need for an irrigation system that is reactive to a plant's real time needs in situ. The system should be applicable, no matter if the system is intended to be used in a pot, in a greenhouse or in open ground cultivation.

### Summary

The invention is, according to a first aspect defined as an irrigation system comprising an external pipe configured to convey irrigation fluid to an irrigation tank, and a plurality of irrigation stakes that are configured to receive the irrigation fluid from the irrigation tank and convey the irrigation fluid to soil/bedding material the vicinity of a plant root base, wherein:
irrigation fluid supplied to the irrigation tank is under pressure;
a valve coupled to a base unit is configured to be controlled by a float, whereby irrigation fluid entering the irrigation tank elevates the float, and when the float reaches a threshold level the valve coupled to the float stops the flow of irrigation fluid to the irrigation tank;
irrigation fluid from the irrigation tank is conveyed by capillary action to the plurality of irrigation stakes, the irrigation stakes being directly coupled to the irrigation tank and/or embedded in the soil/bedding material in the vicinity of the irrigation tank;
emitting side/s of the irrigation stakes are configured to substantially vertically align with the specific plant material root base they are configured to irrigate; and
irrigation fluid dispensed through the irrigation stakes is at least in response to diminishing moisture content in the soil/bedding material caused by a plant root in the vicinity of the plant root base.

Accordingly, the present innovation employs a below grade fluid irrigation tank and a plurality of stakes. The stakes are configured to deliver irrigation fluid from the irrigation tank to a plant root base. The fluid conveyed in pipes from the irrigation tank through the stakes to the plant root base travels under capillary action.

The irrigation fluid flowing by capillary action maintains moisture levels in proximity to the plant root base in accordance with the plant's needs. The plant's needs vary throughout the plant's seasonal growth cycles, age, and the volume of moisture in the soil/bedding material existing due to other factors than the irrigation system. The plant dictates the amount of water it needs and for the duration needed to sustain its growth.

In this capacity, the fluid irrigation tank functions as a passive holding tank to support dispensing the fluid irrigation as driven by the plant. The stakes coupled directly to the irrigation tank's top surface and the stake pipes also coupled to the irrigation tank's top surface convey irrigation fluid to the plant/s root base by capillary action, elevating fluid from the tank through and above the tank to the plant/s root bases wherever they are.

The replenishment of the irrigation fluid into the irrigation tank can be accomplished manually and/or can be automated. The manual method relies on an infill pipe with a removable cap. The infill pipe with the removable cap preferably extends above the soil/bedding material top grade. There are several methods to monitor the fluid level in the irrigation tank. These methods include a mechanical float with a visual marker, and an electronic sensing and alerting device. The electronic sensing device can include at least one of an audio and/or a visual alerting device. It can also include a communication device that can transmit a remote alert via at least RF (Radio Frequency) communication when the fluid level inside the irrigation tank falls below a threshold level.

The fluid irrigation tank can be coupled to a network of fluid irrigation tanks by at least one external fluid conveying pipe that is configured to deliver irrigation fluid to the irrigation tanks from a remote source. The fluid irrigation tanks may be connected to each other via jumper pipes. Fluid conveyed through the external networked pipe flowing into the irrigation tank/s can be controlled by at least one of a mechanical valve and an electronic valve. Both the mechanical and the electronic valves' operation can be activated by a sensing device.

The mechanical valve's sensing device can be as rudimentary as a float that when the fluid irrigation level reaches a threshold level, the float activates a valve directly or indirectly, thereby stopping the flow of irrigation fluid into the tank. The valve can be unitary with the float. The electronic valve's sensing device can include at least one of a float, a laser, and an audio sonic means.

When the fluid level inside the irrigation tank falls below a threshold level, the sensing device can send a direct signal to a valve to stop the flow of fluid to the irrigation tank and/or send a signal to a processor that in turn directs a valve to stop the flow of fluid to the irrigation tank. Further, the sensing device can also trigger at least one alert type to a caretaker. The alert can include anomalies such as fluid overflowing, extreme irrigation fluid temperature, and/or an excessive rate of fluid depletion.

It is also noted that the electronic valve controlled by a processor can evacuate fluid from tanks through a fluid evacuation plug/valve when soil/bedding material may be subject to freezing. Most commonly, a communication device can be coupled to the processor that controls the electronic valve to receive and transmit such alerts.

The sensing device can be coupled to the fluid irrigation infill pipe and/or the fluid irrigation infill pipe's cap. The mechanical sensing device can activate a switch that relates a signal and/or a command to an electronic valve directly and/or indirectly via a processor. The electronic sensor relies on electrical power for operation. Electrical power can be delivered to the sensor and any other power consuming device of the fluid irrigation tank through at least one of a local power storage unit such as a battery, locally generated power via at least a photocell with a storage unit, and power conveyed from a remote source. The latter can be conveyed above and/or below grade.

The electronic devices that can be powered by at least the three aforementioned power sources can include a plurality of sensors, a valve, a processor, a power storage unit, an output device such as a speaker/microphone, and a light source, a communication device, a thermal heater, and a pump.

Another aspect of the present innovation is a method of dispensing plant nutrients and protective plant health additives. The present innovation introduces a novel concept to direct nutrients and/or protective plant health additives to the vicinity of a plant root base. This innovative concept attaches the nutrients and/or the protective plant health additive compound/s to the irrigation stake. The irrigation stake is embedded in the soil/bedding material to a depth that is substantially aligned with the depth of the specific plant material planted in its vicinity.

This method is a direct delivery method of nutrients and protective plant health additives to the vicinity of a plant root base. The additive compound/s attached to the irrigation stake can be delivered in solid, in quasi-solid, or in loose form that has a protective covering. The compounds can be configured to release its/their content in a form of time release, triggered, for example by irrigation fluid alone, or mixed with at least one other fluid.

This approach has several benefits over other, more conventional plant nutrient enrichment and measures to protect plants from ground borne viruses, bacteria, and other pests. These benefits include activating specific ingredients only when needed, avoiding clogging the irrigation system by adding compounds that can crystallize, and delivering the released compounds directly into a plant root base. In addition, this delivery method preserves costly compounds that are often wasted by rainwater runoff. Further, this method dispenses the compound/s in the proximity of the plant root base, where more conventional methods have the compound/s seep through the soil even where plant roots do not exist.

According to another aspect, an irrigation system is provided comprising an irrigation tank, an external pipe that is configured to convey irrigation fluid to the irrigation tank, a processor with memory and resident code, a power supply, a valve coupled to the base unit, a sensor, and a plurality of irrigation stakes that are configured to receive irrigation fluid from the irrigation tank and convey the irrigation fluid to the vicinity of a plant root base, wherein
irrigation fluid supplied to the irrigation tank is under pressure;
the valve coupled to the base unit is configured to be controlled by the processor;
the irrigation fluid level in the irrigation tank is configured to be monitored by the sensor, said sensor is electrically, mechanically or electromechanically coupled to the processor;
at least one local and/or remote power source is configured to power power consuming device/s of the base unit including the processor;
the sensor monitoring the irrigation fluid level in the irrigation tank is configured to signal to the processor when the irrigation fluid level inside the irrigation tank falls below a threshold level;
the processor being configured to controllably open the valve to enable irrigation fluid to flow into the irrigation tank upon receipt of a signal from the sensor; and wherein
irrigation fluid from the irrigation tank is configured to be conveyed by capillary action to the irrigation stakes, the irrigation stakes being configured to be directly coupled to the irrigation tank and/or embedded in the soil/bedding material in the vicinity of the irrigation tank with emitting side/s of the irrigation stakes being substantially vertically aligned with the specific plant material root base they are configured to irrigate; and
wherein irrigation fluid is configured to be dispensed through the irrigation stakes at least in response to diminishing soil/bedding material moisture content caused by a plant root in the vicinity of the plant root base.

The advantages discussed above are equally and directly applicable also to the irrigation system according to this aspect.

The irrigation systems may be used in planters, in a greenhouse or in in open ground cultivation.

The utility of the present innovations utility can be summarized by describing several key attributes they have over other irrigation and plant health maintenance methods -
- Reduced use of irrigation fluid, providing fluid to plant/s at the right volume when needed, thus curtailing irrigation fluid waste.
- Directing irrigation fluid to plant/s root base, thus saving irrigation fluid that otherwise would be wasted due to percolating through the soil/bedding material away from a plant root base.
- Maintaining the flow of irrigation fluid to plant over an extended time period when a water supply is not readily available.
- Dispensing nutrients and plant health protection compounds in the vicinity of the plant root base by attaching the compounds to an irrigation stake.
- Reducing operational tank and stake maintenance resulting from irrigation line clogging.
- Introducing plant root repellent material to irrigation stakes, to protect the irrigation system from invasive root proliferation.
- The placement of irrigation stakes at trees' drip line forms a robust root system that withstands wind loads.
- Ability throughout plant life to add and/or relocate irrigation stakes as a plant grows.
- Ability to irrigate a plurality of plant types where each type root system is in a different depth below grade.

### Short Description of Figures

The invention will be described in detail with reference to the schematic drawings.
Figures 1a and 1b show an elevation and a section of a mechanical base unit coupled to an infill tank of an irrigation tank respectively.
Figures 2a and 2b show an elevation and a section of an electrical base unit coupled to an infill tank of an irrigation tank respectively.
Figures 3a, 3b, and 3c show an exemplary embodiment of an irrigation tank assembly in top view, long side view, and short side view respectively.
Figures 4a, 4b, and 4c show an exemplary embodiment of an irrigation tank's assembly comprising two tanks in top view, long side view, and top perspective view respectively.
Figures 5a, 5b, and 5c show a top view, a side view, and a top perspective view of a tank's irrigation assembly inside an exemplary planter respectively.
Figures 6a and 6b show exemplary vertical cross sections of a planter retaining an irrigation tank's assembly.
Figures 7a, 7b, 7c, and 7d show a top view, a bottom view, and a side view of a direct mount to the irrigation tank stake. Figure 7d shows a central vertical section through the stake.
Figures 8a, 8b, 8c, and 8d show a top view, a bottom view, and a side view of a shallow embedment piped stake. Figure 8d shows a central vertical section through the stake.
Figures 9a, 9b, 9c, and 9d show a top view, a bottom view, and a side view of a deep embedment piped stake. Figure 9d shows a central vertical section through the stake.

### Detailed description

In the following the invention with its embodiments and according to its different aspects will be discussed with reference to the drawings.

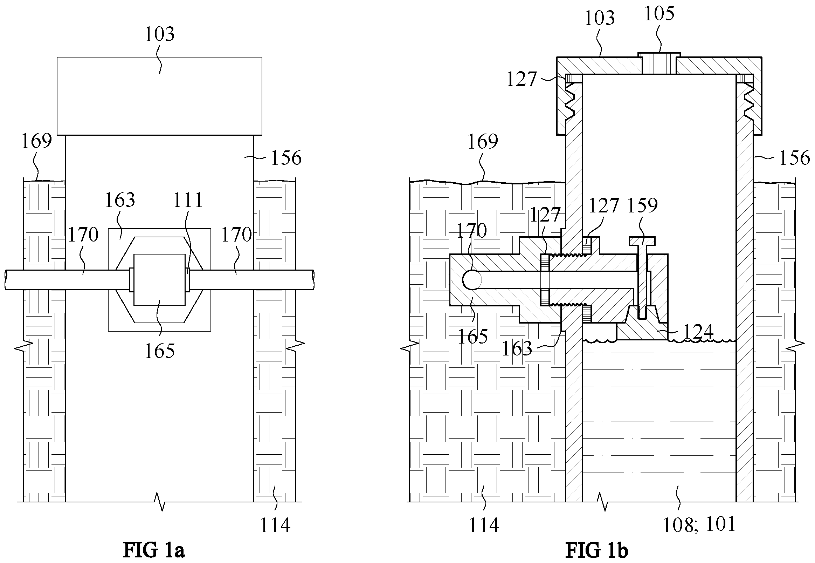

Starting with Figs. **1a** and **1b**, an elevation and a section of a mechanical base unit coupled to an infill tank of an irrigation tank respectively is shown.

**Fig. 1a** shows a base unit 165 coupled to an infill pipe base unit retainer 163. An external fluid conveyance pipe 170 is shown coupled to the base unit 165 by couplers 111 from both ends. Irrigation fluid flowing through the fluid conveyance pipe 170 can be configured to provide irrigation fluid to a plurality of irrigation tanks.

The base unit 165 shown is coupled to the infill pipe 156. The infill pipe 156 couples at its bottom end to the irrigation tank (not shown). Its top end couples to a cap 103. At least a portion of the infill tank 156 can extend above the top of grade 169. The cap 103 can be removable.

The base unit 165 can be detachable from the infill pipe 156. A detachable base unit 165 enables quick unit replacement in the event the unit should fail. The detachable two-part assembly enables quick changeout when a different plant planted has a different irrigation regime. The base unit 165 can include a filtration device (not shown) to prevent contaminants from entering the irrigation tank (not shown). The filtration device can also be removable and can be coupled to at least one of the base unit 165 and the fluid conveyance pipe 170.

**Fig. 1b** shows a vertical section through the infill pipe 156 with coupled base unit 165 and a cap 103. The present embodiment shows a two-part base unit 165 comprising an external part and an internal part. The internal part comprises a float 124 integral to a valve. The float's mobility is guided by a float leader 159. The valve coupled to the float 124 is configured to open when the float 124 elevation inside the infill pipe 156 falls below a threshold level. In another embodiment the float can be inside the irrigation tank. Once the valve opens, irrigation fluid conveyed in the fluid conveyance pipe 170 can flow into the irrigation tank infill pipe 156 and further down to the irrigation tank 101 to which a lower end of the tank infill pipe 156 connects.

The two-part base unit 165 can couple to one another by at least a threaded connection with gaskets preventing fluid passage. The present figure shows an infill pipe base unit retainer 163. The base unit retainer 163 can be a surface that is configured to press against the surface of the exterior part of the base unit having a fluid tight gasket between sealing the connection. In another embodiment, an adaptor can be used coupling the base unit 165 external part to the infill pipe 156.

The placement of the base unit 165 can be configured in proximity to the infill pipe cap 103 opening. Placing the base unit in proximity to the infill pipe 156 opening enables easy base unit 165 installation and replacement. The infill pipe 156 is configured to have a minimal rise over the top of grade 169 of the soil/bedding material 114. The cap 103 covering the opening of the infill pipe 156 along with the infill pipe extension above the top of grade 169 are configured to minimally obstruct the surrounding plant material while affording easy access.

The cap 103 shown covering the infill pipe 156 opening provides access to the irrigation tank interior. While the primary means of fluid conveyance to the irrigation tank is through the base unit 165, when for any reason fluid is not conveyed through the fluid conveyance pipe 170, a caretaker can manually maintain the level of irrigation fluid in the irrigation tank by removing the cap 103 and pouring irrigation fluid through. The cap 103 can be secured to the infill pipe 156 by a thread with a gasket 127 between.

The cap 103 can include an air breather 105 that allows air pressure to equalize, thus preventing a vacuum effect inside the irrigation tank. The air breather 105 can act as a fluid overflow egress opening when a faulty valve/float can't control the flow of irrigation fluid into the irrigation tank. It is noted that placing the infill valve 124 in proximity to the cap elevates the irrigation fluid level above the irrigation tank and closer to the top of grade. Despite the direct mounted and piped stakes' connectivity to the top of the irrigation tank, under Pascal's law, the irrigation fluid level equalizes at or in proximity to the infill valve 124. As a result, the irrigation fluid lift can be under 100 mm.

The flow rate of the irrigation fluid 108 from the irrigation tank 101 through irrigation stakes to the vicinity of a plant root base is critical for the plant's health. Too much irrigation fluid 108 causes root rot and a waste of irrigation fluid. It can also undermine the root structure making the plant susceptible to falling over when subjected to wind loads. Insufficient irrigation causes the plant to wilt. The balance between these two conditions needs to be maintained season by season throughout the life of the plant.

The mechanical valve of the irrigation tank receiving irrigation fluid under pressure from a fluid conveyance pipe 170 is configured to stop the fluid inflow once a float reaches a threshold level. The flow rate of the irrigation fluid from the irrigation tank through the irrigation stakes to the soil/bedding material in the vicinity of the plant root base can be controlled by at least one of the type of the wick used, the diameter of the wick/conduit pipe, the number of openings and size of the stake section dispensing the irrigation fluid, the number of stakes embedded in the vicinity of a plant root base, and the fluid density.

It is noted that because capillary action in part migrates fluid from a high moisture content area to a low moisture content area, it is assumed that the flow rate of the irrigation fluid slows down as moisture levels in the soil/bedding material in the vicinity of the stake increase.

In at least one other embodiment, the base unit can at least in part couple to the cap 103. Further, in at least one other embodiment (not shown) at least one nutrient and plant health substance can be let into the irrigation tank through the infill pipe 156. The length of the infill pipe 156 can vary and can be determined by at least the plant/s root base depth the irrigation tank is configured to irrigate.

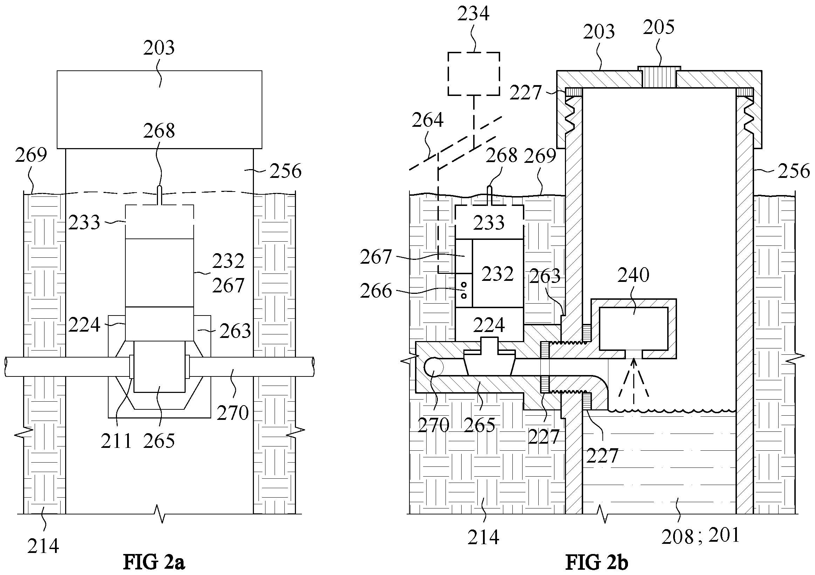

Now turning to **Figs. 2a** and **2b** which show an elevation and a section of an electrical base unit coupled to an infill tank of an irrigation tank respectively.

**Fig. 2a** shows a base unit 265 coupled to an infill pipe base unit retainer 263. The base unit retainer 263 can be fabricated unitarily with the infill pipe 256 or can be a coupled adaptor. An external fluid conveyance pipe 270 is shown coupled to the base unit 265 by couplers 211 from both ends. Irrigation fluid 208 flowing through the fluid conveyance pipe 270 can be configured to provide irrigation fluid to a plurality of irrigation tanks 201 that connect to the lower end of the infill pipe 256.

The base unit 265 shown with or without a base retainer unit 263 is configured to couple to the infill pipe 256. The infill pipe 256 at its bottom end couples to an irrigation tank 201, and at its top end couples to a detachable cap 203. At least a portion of the infill tank 256 can extend above the top of grade 269. The cap 203, with at least one air breather 205, can be fixed or detachable.

The base unit 265 shown with the present embodiment includes a valve 224, a processor 232 with resident memory and code, a resident power storage/power supply unit 267, and an optional communication device 233 with an antenna 268. The communication device 233 is shown in dashed lines. It is noted that the present base unit 265 is configured to operate by electrical power. The electrical power can be delivered from a remote source and/or can be generated locally by, for example, a photovoltaic panel.

The base unit 265 can be detachable from the infill pipe 256. The detachable base unit 265 enables quick unit replacement when the unit fails. A detachable base unit 265 also enables quick changeout to a different style base unit 265. Such a changeout may occur when a different plant planted has a different irrigation regime. The base unit 265 can include a filtration device (not shown) to prevent contaminants from entering the irrigation tank (not shown). The filtration device can also be removable and coupled to at least one of the base unit 265 and the fluid conveyance pipe 270.

**Fig. 2b** shows a vertical section through infill pipe 256 with a coupled base unit 265 and a cap 203. The present embodiment shows a two-part base unit 265 comprising an external part and an internal part. The internal part comprises a sensor 240 that is configured to monitor the irrigation fluid level in the irrigation tank 203 below and directly or indirectly open a valve 224 when the sensed irrigation fluid level inside the tank falls below a threshold level.

The sensor 240 can be fully electronic and/or electromechanical. The electromechanical sensor can employ, for example, a float (not shown) that is connected to an electronic switch. The electronic switch can be configured to directly actuate the valve 224, or transmit a signal to a processor 232 that in turn opens the valve 224. The electronic sensor can be operated employing at least one of, Doppler effect and laser depth sensing principle.

The external part of the base unit 265 can be configured to include at least one of a processor 232, a power storage unit/power supply 267, a power entry port 266 configured to receive electrical conductors, and a valve 224. The present figure also shows an optional communication device 233 with an antenna 268 extending above top of grade 269.

The communication device 233 can be configured to establish at least RF (Radio Frequency) communication between the base unit processor 232 and at least one remote client.

The processor 232 is coupled to a sensor 240, and a valve 224 is configured to control the operation of the valve 224. When the fluid level inside the irrigation tank falls below a threshold level, the processor directs the valve 224 to open, letting irrigation fluid from the exterior fluid conveyance pipe enter the irrigation tank 201. When the fluid level reaches the threshold level, the processor 232 then directs the valve 224to close, stopping the inflow of the irrigation fluid.

The present figure also shows two power sources. The first is a remote power source 264 that can be conveyed below or above the soil/bedding material 214 top level grade 269. The second power source can be locally generated power that can include at least one of a photovoltaic panel 234 and a wind turbine (not shown).

The processor's 232 code can include a plurality of sub-programs. At least one of the programs can include self-learning algorithms that can be configured to learn the specific environmental conditions surrounding an irrigation tank, process the data and apply the learned knowledge to improve on the system's utility. The learned knowledge applies both to the irrigation system operational utility and the data collected about the plant/s irrigated by the irrigation tank.

In at least one embodiment, the code employing AI logic can reach out to external clients to receive information and/or to seek advice concerning anomalies experienced with a plant and/or the environment where the plant is planted. The processor 232 when coupled to a communication device 233 can also receive and/or transmit data. For example, a central monitoring station can communicate via a central controller or directly to an array of irrigation tanks that ground freeze is expected in proximity to the irrigation tank.

The processor 232 of each of the irrigation tanks can then direct a flush valve (not shown) in the irrigation tank to evacuate the tank's irrigation fluid.

In the same or another embodiment, when the irrigation fluid infill valve 224 fails, the processor acting on input from the sensor 240, via its communication device can communicate an alert to a caretaker that the infill valve has failed. In yet the same or a different embodiment, a moisture probe (not shown) can be embedded in the soil/bedding material. When the probe communicates to the processor 232 that the soil/bedding material is over saturated, the processor 232 can stop the infill valve 224 from letting fluid into the tank.

The two-part base unit 265 can couple to one another by at least a threaded connection with gaskets that prevent fluid leakage. The present figure shows an infill pipe base unit retainer 263. The base unit retainer 263 can be a surface configured to press against the surface of the exterior part of the base unit 265 having a fluid tight gasket between sealing the connection.

The base unit retainer 263 can be fabricated unilaterally with an infill pipe 256. In a different embodiment an adaptor can be used for coupling the base unit 265 to the infill pipe 256. The placement of base unit 265 can be in proximity to the infill pipe cap 205 opening. Placing the base unit 265 in proximity to the infill pipe 256 opening enables easy base unit 265 installation and replacement.

The infill pipe 256 is configured to have a minimal rise over the top of grade 269 of the soil/bedding material 214. The cap 203 covering the opening of the infill pipe 256 along with the infill pipe 256 extension above the top of grade 269 are configured to minimally obstruct the surrounding plant material while affording easy access.

The cap 203 shown covering the infill pipe 256 opening provides access to the irrigation tank interior. While the primary means of fluid conveyance to the irrigation tank is through the base unit 265, when for any reason fluid is not conveyed through the fluid conveyance pipe 270, a caretaker can manually maintain the irrigation fluid in the irrigation tank by removing the cap 203 and pouring irrigation fluid through.

The cap 203 can be secured to the infill pipe 256 by a thread with a gasket 227 between. The cap 203 can include an air breather 205 that allows air pressure to equalize, thus preventing a vacuum effect inside the irrigation tank. The air breather 205 can act as a fluid overflow egress opening when a faulty infill valve 224 fails to control the flow of irrigation fluid into the irrigation tank.

In at least one other embodiment (not shown), the base unit can at least in part couple to the cap 203. Further, in at least one other embodiment (not shown) at least one nutrient and a plant health substance can be let into the irrigation tank 201 through the infill pipe 256. The length of the infill pipe 256 can vary and can be determined by at least the plant/s root base depth the irrigation tank is configured to irrigate.

It is noted that placing the infill valve 224 in proximity to the cap elevates the irrigation fluid level above the irrigation tank and closer to the top of grade. Despite the direct mounted and piped stakes' connectivity to the top of the irrigation tank, under Pascal's law, the irrigation fluid level equalizes at or in proximity to the infill valve 224. As a result, the irrigation fluid lift can be under 100 mm.

The flow rate of the irrigation fluid 208 from the irrigation tank 201 through the irrigation stakes to the vicinity of a plant root base is critical for the plant's health. Too much irrigation fluid 208 causes root rot and a waste of irrigation fluid. It also can undermine the root structure, making the plant susceptible to falling over when subjected to wind loads. Insufficient irrigation causes the plant to wilt. The balance between these two conditions needs to be maintained season by season throughout the life of the plant.

The flow rate of the under-pressure irrigation fluid 208 entering the irrigation tank with the electrical valve 224 can be controlled. The control can be local or remote. The locally controlled system can comprise a moisture probe that is embedded in the vicinity of the irrigation tank and is communicatively coupled to the irrigation tank processor 232. When the moisture level reaches a threshold level, the moisture probe (not shown) sends a signal to the processor 232 and the processor 232 directs the valve 224 to stop and/or limits the flow of the irrigation fluid 208 entering the irrigation tank until soil/bedding material 214 moisture conditions sensed let the processor 232 know that moisture levels in the soil/bedding material 214 have fallen below a second minimum level. Then the processor 232 directs the valve 224 to open, letting replenished irrigation fluid 208 enter the irrigation tank.

The flow rate of the irrigation fluid 208 from the irrigation tank through the irrigation stakes (not shown) to the soil/bedding material 214 in the vicinity of the plant root base can be controlled by at least one of the type of the wick used, the diameter of the wick/conduit pipe, the number of openings and size of the stake section dispensing the irrigation fluid, the number of stakes embedded in the vicinity of a plant root base, and the fluid density.

In a different embodiment, a master controller (not shown) can control a plurality of irrigation tanks' fluid inlet valves 224. The master controller processor can be coupled to a master moisture probe (not shown) and a communication device (not shown) that can communicatively couple to the communication devices coupled to the irrigation tanks. The master controller code can be driven by AI algorithms including self-learning algorithms that are trained to configure the irrigation flow needs based on at least local soil/bedding material 214 composition, time of day, time of year, plant age, weather conditions, and historical data gathered and compiled. The master controller can receive and communicate inputs received from a remote location. Further, while the master controller is generally configured to control a plurality of irrigation tanks, it can also control individual tanks.

In commercial applications, a master controller can monitor the plant's health condition by employing a resident UAV (not shown). The master controller can direct the UAV (Unmanned Aerial Vehicle) to fly over a designated area and gather images that correlate a plant with a digital map giving each plant an address. The images captured can be analysed by the processor code triggering a follow-up action. The action can include directing a valve of at least one irrigation tank to supply fluid to the plant. The images analysed can also trigger the use of nutrient and/or plant health control to combat or prevent diseases.

It is noted that because capillary action in part migrates fluid from high moisture content area to a low moisture content area it is assumed that the flow rate of the irrigation fluid slows down as moisture levels in the soil/bedding material in the vicinity of the stake increases.

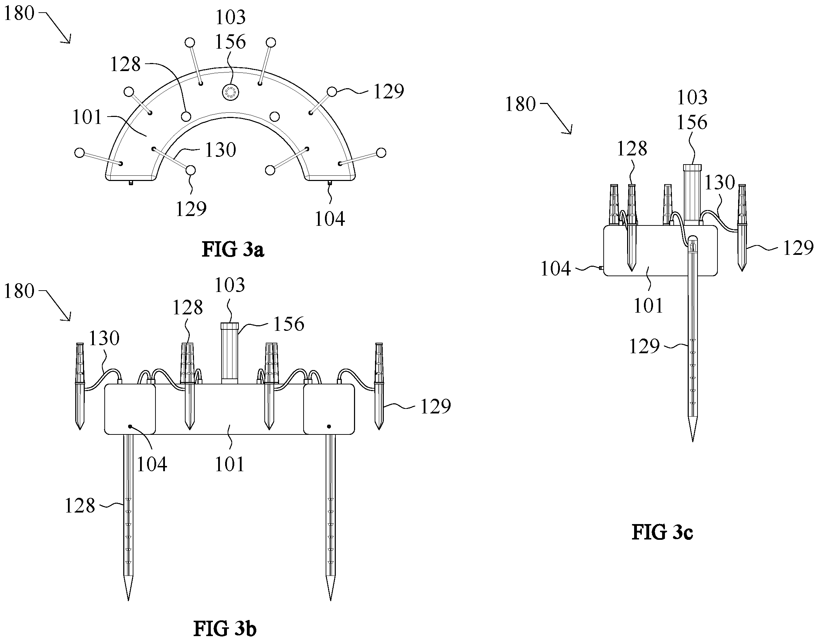

**Figs. 3a, 3b,** and **3c** show an exemplary embodiment of an irrigation tank assembly in top view, long side view, and short side view respectively.

**Fig. 3a** shows a top view of an irrigation tank assembly 180 comprising a crescent shaped irrigation tank 101 coupled to a plurality of stakes 128 and an infill pipe 156 with a cap 103 on top. The crescent form irrigation tank is primarily configured to be placed next to a trunk of a bush or a tree. A complimentary crescent shaped irrigation tank 101 can be placed on the opposite side to the tank, thus doubling the fluid storage capacity of the tank 101. Jumper pipes (not shown) coupled to nipples 104 at the ends of the crescent can connect between the two tanks 101. The irrigation tank assembly 180 can be provided with a system of the types that have been discussed above with reference to Figs 1a and 1b and 2a and 2b, i.e. either with a mechanical base unit system or an electrical base unit system. The irrigation tank assembly may be applied in a planter, a greenhouse or in open ground cultivation.

Two types of stakes shown include direct mounted stakes 128 and piped stakes 129. Piped stakes 129 couple to a top surface of the irrigation tank 101. Piped stakes 129 are embedded in the soil/bedding material away from the irrigation tank with a pipe 130 extending from the stake 129 to a top surface of the irrigation tank 101. It is noted that the irrigation fluid conveyed from both the direct mounted 128 and the piped stakes 129 can travel upwardly exiting the irrigation surface through openings in the irrigation tank top surface.

**Fig. 3b** shows a long elevation view of an irrigation tank assembly 180 comprising an irrigation tank 101, a plurality of short piped irrigation stakes 129, a plurality of deep piped irrigation stakes 129, a plurality of direct mounted irrigation stakes 128, pipes 130 configured to convey fluid to the piped irrigation stakes 129, an infill pipe 156 with a cap 103 on top, and nipples 104 configured to couple to jumper pipes (not shown).

**Fig. 3c** shows a long elevation view of an irrigation tank assembly 180 comprising an irrigation tank 101, a plurality of short piped irrigation stakes 129, a plurality of deep piped irrigation stakes 129, a plurality of direct mounted irrigation stakes 128, pipes 130 configured to convey fluid to the piped irrigation stakes 129, an infill pipe 156 with a cap 103 on top, and nipples 104 configured to couple to jumper pipes (not shown).

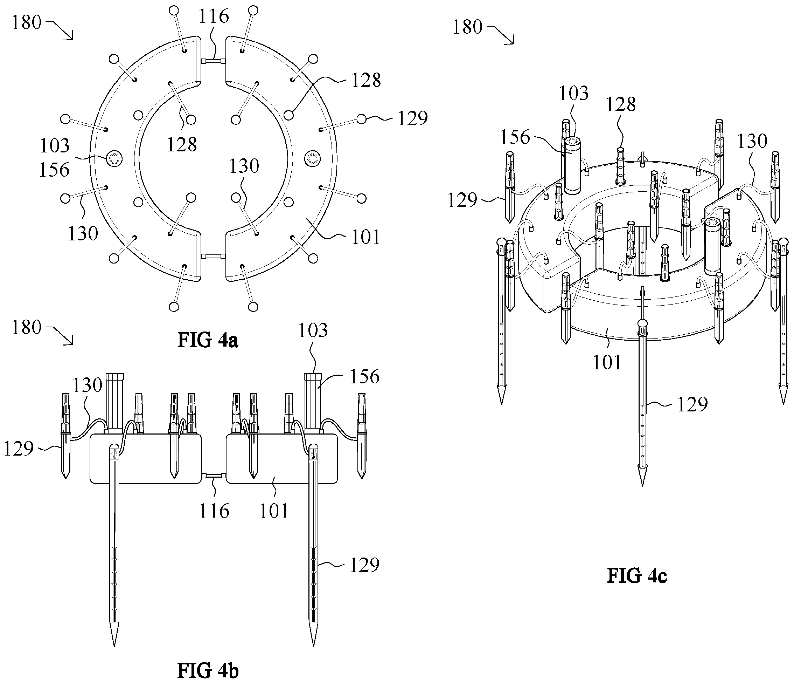

**Figs. 4a, 4b,** and **4c** show an exemplary embodiment of an irrigation tank assembly comprising two tanks in top view, long side view, and top perspective view respectively.

**Fig. 4a** shows a top view of an irrigation tank assembly 180 comprising two crescent shaped irrigation tanks 101 coupled to a plurality of direct mounted stakes 128; and piped stakes 129 and an infill pipe 156 with a cap 103 on top. The crescent form irrigation tank can be configured to be placed around a trunk of a bush or a tree. Jumper pipes 116 can connect between the two tanks 101. The irrigation tank assembly 180 can be provided with a system of the types that have been discussed above with reference to Figs 1a and 1b and 2a and 2b, i.e. either with a mechanical base unit system or an electrical base unit system. The irrigation tank assembly may be applied in a planter, a greenhouse or in open ground cultivation.

The two types of stakes shown include direct mounted stakes 128 and piped stakes 129. Direct mounted stakes 128 couple to a top surface of the irrigation tank 101. Piped stakes are embedded in the soil/bedding material away from the irrigation tank with a pipe extending from the stake 129 to a top surface of the irrigation tank 101. The two tanks' assemblies can have its own infill pipe 156 that can enable irrigation access to the plant from opposite sides while the irrigation fluid can flow all around to the root base of the bush/tree.

It is noted that the irrigation fluid conveyed from both the direct mounted and the piped stake 128, 129 can travel upwardly, exiting the irrigation surface through openings in the irrigation tank top surface. It is further noted that the shape of the irrigation tank can vary, and the tank can be embedded in both indoor and outdoor environments inside planters' bedding material or outdoor environment soil.

**Fig. 4b** shows a long elevation view of an irrigation tank assembly 180 comprising two irrigation tanks 101, a plurality of short piped irrigation stakes 129, a plurality of deep piped irrigation stakes 129, a plurality of direct mounted irrigation stakes 128, pipes 130 configured to convey fluid to the piped irrigation stakes, infill pipes 156 with a caps 103 on top, and a jumper pipe 116.

**Fig. 4c** shows a top perspective view of an irrigation tank assembly 180 comprising an irrigation tank 101, a plurality of short piped irrigation stakes 129, a plurality of deep piped irrigation stakes 129, a plurality of direct mounted irrigation stakes 128, pipes 130 configured to convey fluid to the piped irrigation stakes, and infill pipes 156 with caps 103.

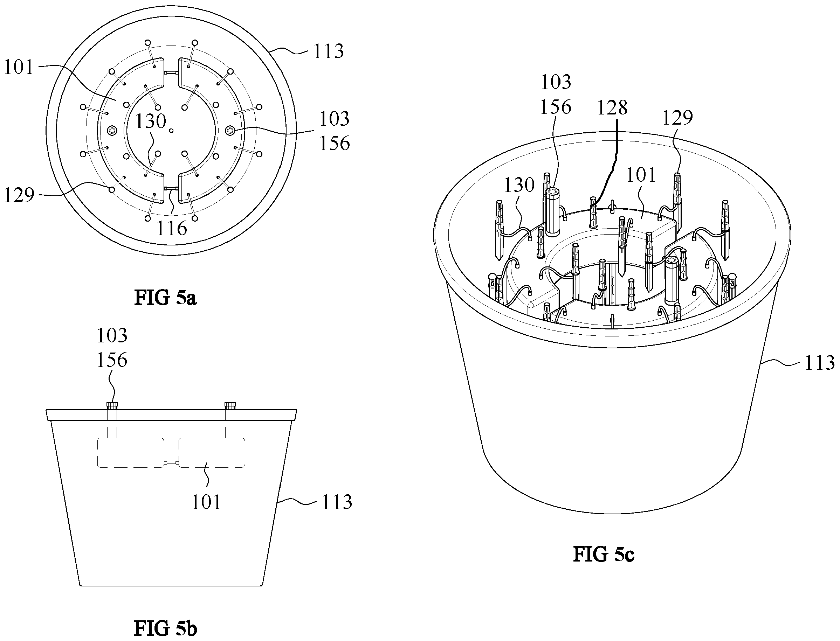

**Figs. 5a, 5b,** and **5c** show a top view, a side view, and a top perspective view of a tank irrigation assembly inside an exemplary planter respectively.

**Fig. 5a** shows a top view of an irrigation tanks assembly positioned inside a planter 113. The irrigation tank assembly 180 can be provided with a system of the types that have been discussed above with reference to Figs 1a and 1b and 2a and 2b, i.e. either with a mechanical base unit system or an electrical base unit system. The irrigation tank assembly may be applied in a planter, a greenhouse or in open ground cultivation.

The assembly form follows the form of the round planter 113 leaving a gap between the outer walls of the irrigation tanks 101 and the inner walls of the planter 113. The gap formed enables planting flowers and bushes at the inner perimeter of the planter 113 with piped irrigation stakes 129. The pipes 130 extend from the irrigation tanks 101 to the stakes 129 wherein the thus piped irrigation stakes 129 are embedded in the bedding material (not shown) in proximity to the plant's root base (not shown). The elements shown include infill pipes 156 with caps 103 on top and jumper pipes connecting the irrigation fluid flow between the two irrigation tanks 101.

**Fig. 5b** shows a side view of planter 113 with an approximate location of the irrigation tank 101 assembly embedment inside the planter 113 (in dashed lines). Above the top surface of the planter 113, two infill pipes 156 with caps 103 are shown.

**Fig. 5c** shows a top view perspective of an irrigation tank assembly comprising two tanks 101 inside a round planter 113. The elements shown include piped stakes 129, direct mounted to the tanks' stakes 128, pipes 130 extending from the irrigation tanks 101 to the piped stakes 129, and infill pipes 156 with caps 103 on top.

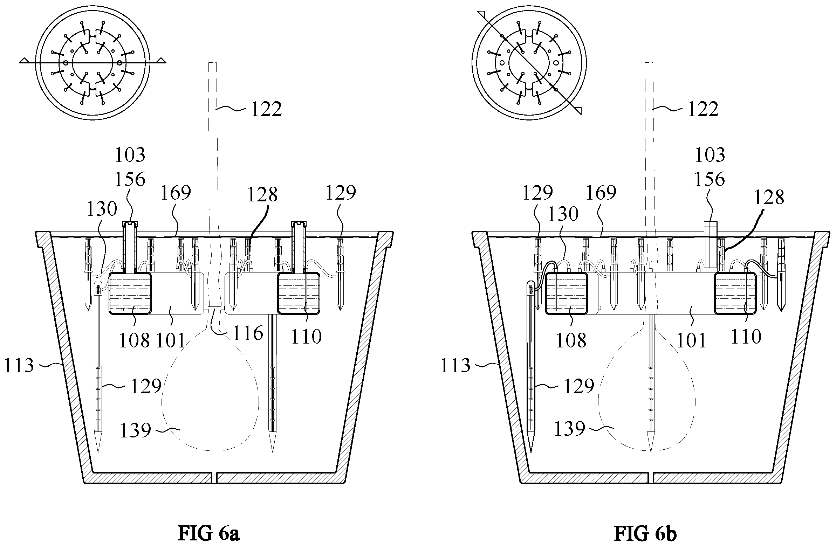

**Figs. 6a** and **6b** show exemplary vertical cross sections of a planter retaining an irrigation tank assembly. The irrigation tank assembly can be provided with a system of the type that has been discussed above with reference to Figs 1a and 1b and 2a and 2b, i.e. either with a mechanical base unit system or an electrical base unit system.

**Fig. 6a** shows a vertical cross section of planter 113 with an irrigation tank assembly 180 embedded inside. A reference plan above the figure shows that the section is taken across the infill pipes 156 of the two coupled irrigation tanks 101. The two tanks 101 shown are coupled by a jumper pipe 116 configured to enable flow of irrigation fluid between the tanks 101.

At the centre of the tank 101 in dashed lines a tree root base 139 is shown with a tree trunk 122 shown extending to the above. Deep root piped irrigation stakes shown at the sides of the tree's root base 139 are configured to convey irrigation fluid to a depth compatible with the tree's root system adapted to extract moisture from the bedding material.

The figure also shows irrigation fluid 108 inside the irrigation tank 101 and a plurality of wicks 110 immersed in the irrigation fluid 108. Irrigation fluid 108 is configured to irrigate plant root bases above, in between, and below the irrigation tanks 101 by capillary action. A wick 110 is shown immersed in irrigation fluid 108 inside the irrigation tank 101. The wick 110 is configured to convey irrigation fluid 108 by capillary action through opening/s in the top of the irrigation tanks 101 to coupled direct mounted irrigation stakes 128 and piped stakes 129. The embedded stakes 128; 129 dispense the irrigation fluid 108 in the proximity of at least one plant root base 139.

It is noted that the present irrigation system reacts in response to the plant's irrigation fluid's 108 needs. As a plant extracts irrigation fluid from the soil/bedding material, the approximate fluid volume is dispensed by an irrigation stake in the vicinity of the plant root base.

**Fig. 6b** shows a vertical cross section of planter 113 with an irrigation tank assembly 180 embedded inside. The present figure's section is shown at 45° to Fig. 6a as indicated in the reference plan above the figure. The elements shown include a tree root base 139 with a tree trunk 122 extending to the above (in dashed line), an irrigation tank 101 with irrigation fluid 108 inside, an infill pipe 156 with a cap above, and a plurality of irrigation stakes comprising direct mounted stakes 128 to the irrigation tank 101 and piped stakes 129 that employ pipes 130 to convey the irrigation fluid 108 from the tanks' 101 interior to the proximity of at least one root base 139. The piped stakes 129 can be delivered in several sizes and embedment depths.

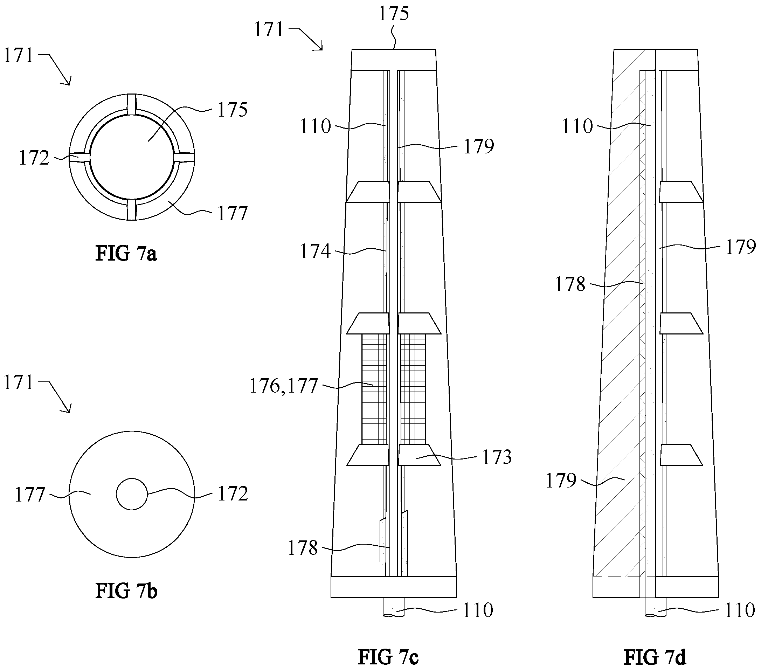

**Figs. 7a, 7b, 7c, and 7d** show a top view, a bottom view, and a side view of a direct mount to the irrigation tank stake. **Figure 7d** shows a central vertical section through the stake. The disclosed stake is of the same overall type as the direct mount stake 128 described above and is applicable in any of the systems described above.

**Fig. 7a** shows a top view of a direct mount irrigation stake 171. The direct mount irrigation stake is configured to couple to the top surface of an irrigation tank (omitted). The top surface of the direct mount irrigation stake elevation can be configured to be at or just below the soil/bedding material top of grade. Other elements shown include a direct mount stake rib 179 and a direct mount stake base 177.

**Fig. 7b** shows a bottom view of a direct mount irrigation stake 171. The direct mount irrigation stake is configured to couple to the top surface of an irrigation tank (omitted). The direct mount irrigation stake base 177 can comprise a planar surface with a central direct mount stake base opening 172. The opening 172 can be configured to couple to a reciprocating threaded or unthreaded nipple at the top of the irrigation tank.

In an alternate embodiment, the direct mount irrigation base 177 can have a threaded or unthreaded nipple that extends downward from the base and is configured to couple to a reciprocating opening in the top surface of the irrigation tank. The nipple can be unitary with the direct mount irrigation stake, or detached and can function as a coupler. The direct mount irrigation stake opening 172 enables the irrigation wick 110 entry into the wick channel above.

**Fig. 7c** shows a side view of a direct mount irrigation stake 171. The direct mount irrigation stake is configured to couple to the top surface of an irrigation tank (omitted). The height of the direct mount stake 171 is contingent on at least one of the embedment of the irrigation tank in the soil/bedding material and the effective placement of the fluid dispensing wick in relation to the depth of the plant root base. Under sea level atmospheric conditions, capillary action irrigation fluid rise is limited. For this reason, when any irrigation stake lifts fluid from an irrigation tank the limit recommended should not exceed 100 mm above the tank's fluid level at approximately sea level atmospheric conditions.

The direct mount irrigation stake figure shows a base 177, a stake rib stiffener, a wick channel 174, a wick 110, a wick rib, and a top section 175. At the bottom above the direct mount stake base 177 a section of an alternate wick covering is shown. This covering, configured to be anti-root barrier, can be at least one membrane of copper oxide with perforated openings for dispensing irrigation fluid and capillary fabric that is tightly knit. The first method is configured to repel plant roots and the second method aims to create difficulty for plant roots to penetrate the fabric and interfere with the wick's ability to convey the irrigation fluid. In at least one embodiment, the capillary fabric can be the wick.

The direct mount irrigation stake 171 can convey nutrient and anti-virus-bacteria-pest substance/s to a plant. The present figure shows at least one anti-virus, anti-bacteria, anti-pest substance/s 176 coupled. The substance/s can be delivered and attached to the stake in hardened, semi-hardened, and loose form with covering. These substances can be configured to release their content/s over time, wherein at least in one embodiment the release is activated by contact with the irrigation fluid.

In a different embodiment the release of at least one substance can be triggered by adding at least one additional material to the irrigation fluid. It is noted that the present method of preserving plant health while providing needed nutrients maintains the present irrigation fluid conveyance system free from obstruction likely to be caused by said substances.

**Fig. 7d** shows a partial vertical cross section through a direct mount irrigation stake 171. The elements shown include a stake rib 179, an optional anti-root barrier 178, and a wick 110.

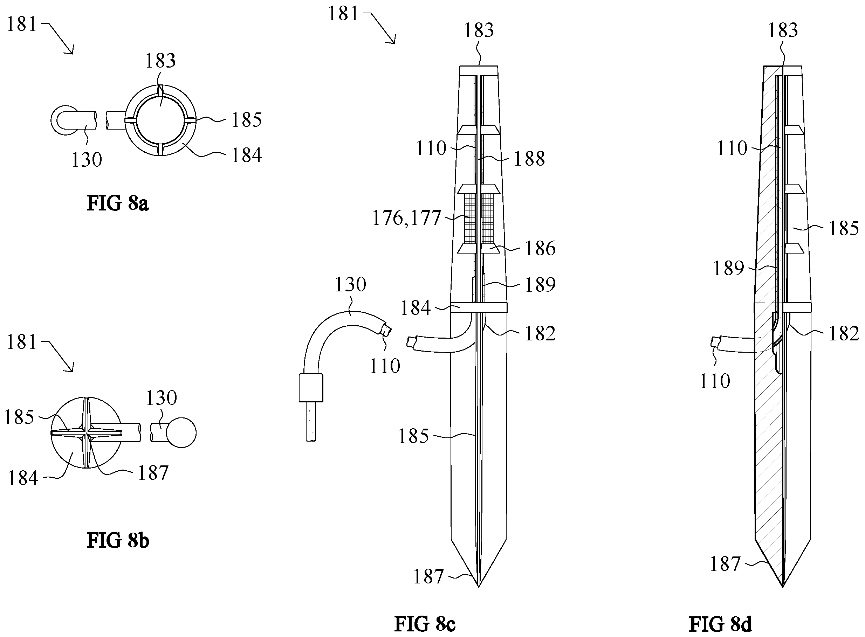

**Figs. 8a, 8b, 8c, and 8d** show a top view, a bottom view, and a side view of a shallow embedment piped stake. **Fig. 8d** shows a central vertical section through the stake. The disclosed stake is of the same overall type as the piped stake 129 described above and is applicable in any of the systems described above.

**Fig. 8a** shows a top view of a short or medium (S/M) length piped irrigation stake 181. The S/M piped irrigation stake 181 is configured to be embedded in soil/bedding material in the vicinity of the irrigation tank. The S/M piped irrigation stake 181 is configured to deliver irrigation fluid through a pipe with a wick to plants that have a relatively shallow root base.

A pipe 130 shown conveys the irrigation fluid upwardly toward the S/M piped irrigation stake top 183. A portion of this stake and more specifically the portion extending above the location where the pipe enters can be the same or similar in design to the previously direct mount irrigation stake. Other elements shown include the S/M stake base 184, and the S/M stake rib185. The S/M piped stake 181 is configured to be driven into the soil/bedding material by force applies on its top surface 183.

**Fig. 8b** shows a bottom view of an S/M piped irrigation stake 181. The S/M piped irrigation stake elements shown include a stake pipe 130 conveying irrigation fluid to the S/M piped stake 181, the stake's vertical ribs 185 converging into a tip 187 at the bottom end, and the stake's base 184.

**Fig. 8c** shows a side view of an S/M piped irrigation stake 181. The S/M piped irrigation stake 181 shown comprises two sections. The first section extends from the S/M stake base 184 to the S/M top 183. The height of the S/M stake 181 first section is contingent on at least one of the embedment of the irrigation tank in the soil/bedding material and the effective placement of the fluid dispensing wick in relation to the depth of the plant root base. The second section extends down from the S/M piped irrigation stake base 184.

At sea level atmospheric conditions, capillary action for lifting irrigation fluid is limited. For this reason, it is recommended to limit the lift height to less than 100mm above an irrigation tank fluid level. However, coupled with Pascal's law as it applies to the relative height of the infill valve in the infill pipe and the stakes' irrigation pipes 130, the lift height of the irrigation fluid by capillary action beyond the irrigation fluid top level is well below the recommended limit.

The S/M piped irrigation stake 181 figure shows a base 184, a stake rib stiffener 186, a wick channel 184, a wick 110, a wick rib 185, and a top section 183. Above the S/M stake base 184 a section partial covering over the wick 110 is shown. This covering, configured to be anti-root barrier 189, can be at least one membrane of copper oxide with a perforated opening for dispensing irrigation fluid and capillary fabric that is tightly knit. The first method is configured to repel plant roots and the second method aims to create difficulty for plant roots to penetrate the fabric and interfere with the wick's ability to convey the irrigation fluid. In at least one embodiment, the capillary fabric can be the wick.

It is noted that while the present figure shows an irrigation pipe that is configured to extend from the stake to the irrigation tank, in at least one different embodiment, a quick connect fitting can be configured to connect a pipe 130 to a stake without disrupting the capillary fluid conveyance system from the irrigation tank through and out of the irrigation stake (not shown). This approach can enable a user to order the correct type of stake along with the best nominal irrigation stake pipe that includes a compatible wick.

The S/M piped irrigation stake 181 can convey nutrient and anti-virus-bacteria-pest substance/s to plants. The present figure shows at least one anti-virus, anti-bacteria, anti-pest substance/s 179 coupled. The substance/s can be delivered and attached to the stake in hardened, semi-hardened, and loose form with covering.

These substances can be configured to release their content/s over time wherein at least in one embodiment the release is activated by contact with the irrigation fluid. In a different embodiment the release of at least one substance can be triggered by adding at least one additional material to the irrigation fluid.

It is noted that the present method of preserving plant health while providing needed nutrients maintains the present irrigation fluid conveyance system free from obstruction likely to be caused by said substances.

**Fig. 8d** shows a partial vertical cross section through an S/M piped irrigation stake 181. The elements shown include an S/M piped staked rib 185, an S/M piped stake pipe entry 182, an optional anti-root barrier 189, an S/M piped stake top surface 183, and a wick 110.

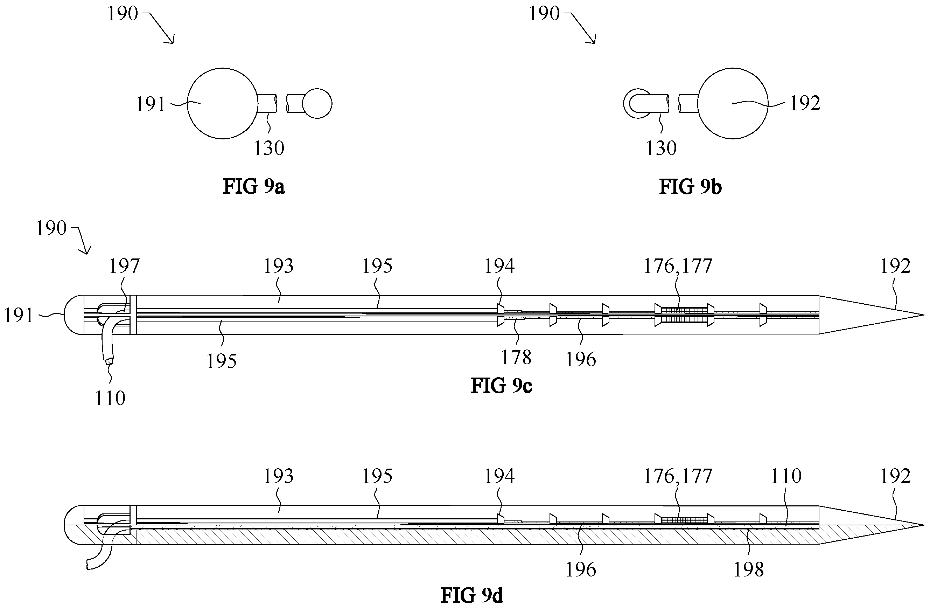

**Figs. 9a, 9b, 9c, and 9d** show a top view, a bottom view, and a side view of a deep embedment piped stake. Figure 9d shows a central vertical section through the stake. The disclosed stake is of the same overall type as the piped stake 129 described above and is applicable in any of the systems described above.

**Fig. 9a** shows a top view of a long (L) piped irrigation stake 190. The L piped irrigation stake 190 is configured to be embedded in soil/bedding material in the vicinity of the irrigation tank. The L piped irrigation stake 190 is configured to deliver irrigation fluid through a pipe with a wick to plants that have a deep root base. The pipe 130 shown is configured to convey the irrigation fluid upwardly toward the L piped stake top 183. The L piped irrigation stake 190 is configured to be driven into the soil/bedding material by force applied on its top surface 191.

**Fig. 9b** shows a bottom view of a L piped irrigation stake 190. The L piped irrigation stake elements shown include a stake pipe 130 conveying irrigation fluid to the L piped irrigation stake 190, and the stake's tip 192.

**Fig. 9c** shows a side view of an L piped irrigation stake 190. The L piped irrigation stake 190 shown comprises two sections. The first section extends from the vicinity of the top of L piped irrigation 191 to at least below the bottom surface of the irrigation tank (not shown). This section can include a L piped irrigation leader 195. The leader 195 does not have any opening to dispense irrigation fluid and acts as a conduit for the wick to extend to the below.

The second section is the portion of the stake that delivers the irrigation fluid to the plant root base. The second section with a tipped end 192 at the bottom of the stake 190 is responsible for driving the stake 190 to its embedment depth. It is noted that, unlike the other stakes that flow irrigation fluid primarily from below to the above, the L piped irrigation stake flows the irrigation fluid from the above to the below.

At sea level atmospheric conditions, capillary action for lifting irrigation fluid is limited. For this reason, it is recommended to limit the lift height to less than 100mm above an irrigation tank fluid level. However, coupled with Pascal's law as it applies to the relative height of the infill valve in the infill pipe and the stakes irrigation pipes 130, the lift height of the irrigation fluid by capillary action beyond the irrigation fluid top level is well below the recommended limit.

The L piped irrigation stake 190 figure shows a pipe 130 with a wick 110, a stake top surface 191, a stake pipe opening 197, a stake rib 193, a stake leader 195, a rib stiffener 194, a stake wick channel 196, a stake tip 192 a base 184, a stake rib stiffener186, a wick channel 184, a wick 110, a wick rib 185, and a partial covering over the wick below the bottom end of the stake leader 195. This covering, configured to be anti-root barrier 198, can be at least one membrane of copper oxide with a perforated opening for dispensing irrigation fluid and capillary fabric that is tightly knit. The first method is configured to repel plant roots and the second method aims to create difficulty for plant roots to penetrate the fabric and interfere with the wick's ability to convey the irrigation fluid. In at least one embodiment, the capillary fabric can be the wick.

It is noted that while the present figure shows an irrigation pipe that is configured to extend from the stake to the irrigation tank, in at least one different embodiment, a quick connect fitting can be configured to connect a pipe 130 to a stake without disrupting the capillary fluid conveyance system from the irrigation tank through and out of the irrigation stake (not shown). This approach can enable a user to order the correct type of stake along with the best nominal irrigation stake pipe that includes a compatible wick.

The L piped irrigation stake 190 can convey nutrient and anti-virus-bacteria-pest substance/s to plants. The present figure shows at least one anti-virus, anti-bacteria, anti-pest substance/s 199 coupled. The substance/s 199 can be delivered and attached to the stake in hardened, semi-hardened, and loose form with covering.

These substances can be configured to release their content/s over time wherein at least in one embodiment the release is activated by contact with the irrigation fluid. In a different embodiment the release of at least one substance can be triggered by adding at least one additional material to the irrigation fluid. It is noted that the present method of preserving plant health while providing needed nutrients maintains the present irrigation fluid conveyance system free from obstruction likely to be caused by said substances.

**Fig. 9d** shows a partial vertical cross section through an L piped irrigation stake 190. The elements shown include an L piped stake leader 195, an L piped staked rib 193, an L piped stake stiffener 194, nutrient 176, anti-virus, bacteria, pest substance/s 177, an optional anti-root barrier 198, an L stake wick channel 196, and a wick 110.

The irrigation systems with the irrigation stakes described above may be used in planters, in a greenhouse or in in open ground cultivation. Although the irrigation tank has been described and illustrated as having a crescent shape, it is to be understood that the irrigation tank may have any geometry. The skilled person realizes that the geometry is best adapted to the intended use and position of the irrigation tank. As a non-limiting example, in the event of a rectangular cultivation bed, no matter if it is a planter, in a greenhouse or open ground cultivation, it may be most space efficient and most practical to provide a rectangular irrigation tank, whereas if the system is intended for a tree, one or more crest shaped may be better suitable to encircle the trunk. Further, the irrigation system is applicable in a planter, in a greenhouse or in open ground cultivation. Hence, the irrigation is applicable both for indoor and outdoor cultivation. The type of irrigation stakes, and the number of irrigation stakes is adapted to the intended application. Further, as given above, the replenishment of the irrigation fluid into the irrigation tank can be accomplished manually and/or be automated

The invention may in one aspect be defined as follows:
Item 1: An irrigation system comprising an irrigation tank, an external pipe that is configured to convey irrigation fluid to the irrigation tank, a processor with memory and resident code, a power supply, a valve coupled to the base unit, a sensor, and a plurality of irrigation stakes that are configured to receive irrigation fluid from the irrigation tank and convey the irrigation fluid to the vicinity of a plant root base, wherein
   irrigation fluid supplied to the irrigation tank is under pressure;
   the valve coupled to the base unit is configured to be controlled by the processor;
   the irrigation fluid level in the irrigation tank is configured to be monitored by the sensor, said sensor is electrically, mechanically or electromechanically coupled to the processor;
   at least one local and/or remote power source is configured to power power consuming device/s of the base unit including the processor;
   the sensor monitoring the irrigation fluid level in the irrigation tank is configured to signal to the processor when the irrigation fluid level inside the irrigation tank falls below a threshold level;
   the processor being configured to controllably open the valve to enable irrigation fluid to flow into the irrigation tank upon receipt of a signal from the sensor; and wherein
   irrigation fluid from the irrigation tank is configured to be conveyed by capillary action to the irrigation stakes, the irrigation stakes being configured to be directly coupled to the irrigation tank and/or embedded in the soil/bedding material in the vicinity of the irrigation tank with emitting side/s of the irrigation stakes being substantially vertically aligned with the specific plant material root base they are configured to irrigate; and
   wherein irrigation fluid is configured to be dispensed through the irrigation stakes at least in response to diminishing soil/bedding material moisture content caused by a plant root in the vicinity of the plant root base.
Item 2: The irrigation system of Item 1, further comprising at least one of a communication module and a power generating device being configured to be coupled to the base unit.
Item 3: The irrigation system of Item 1, wherein resident processor code is configured to monitor irrigation tank fluid consumption and communicate predictive consumption anomalies.
Item 4: The irrigation system of Item 1, wherein at least one power consuming device coupled to the base unit power is a photovoltaic panel.
Item 5: The irrigation system of Item 1, wherein a coupled communication device is configured to transmit signal from or from and to processor of the irrigation tank base unit.
Item 6: The irrigation system of Item 1, wherein a signal from the base unit processor is configured to trigger irrigation tank fluid to flash through a discharge valve.
Item 7: The irrigation system of Item 1, wherein power from a remote power source is configured to be delivered to the irrigation tank by means of at least one of below and above conductors.
Item 8: The irrigation system of Item 1, wherein the base unit is detachable from at least one of the irrigation tank, the infill pipe and a cap.
Item 9: The irrigation system of Item 1, wherein at least one power consuming device is configured to be detachably coupled to the base unit.
Item 10: The irrigation system of Item 1, wherein at least one of a plant nutrient and a plant health substance is coupled to at least a portion of an irrigation stake.
Item 11: The irrigation system of Item 10, wherein the substance coupled to the irrigation stake is configured to be activated by at least one of time release and making contact with the irrigation fluid.
Item 12: The irrigation system of Item 1, wherein an irrigation stake pipe is configured to be detachable in the proximity of the pipe entry to the irrigation stake.
Item 13: The irrigation system of Item 1, wherein a wick originating from inside the irrigation tank extends upwardly above the irrigation fluid level in the irrigation tank and terminates inside a section of a coupled irrigation stake.
Item 14: The irrigation system of Item 1, wherein the irrigation tank is configured to be embedded below the surface of the soil/bedding material and wherein an air breather coupled to the irrigation tank infill pipe equalizes air pressure inside the irrigation tank.
Item 15: The irrigation system of Item 1, wherein the system comprises a plurality of coupled irrigation tanks, and where the coupled tanks are configured to receive irrigation fluid through at least one jumper pipe.
Item 16: The irrigation system according to Item 1, wherein the irrigation system is configured to be used in indoors and outdoors environments.
Item 17: Use of an irrigation system according to Item 1 in a planter, a greenhouse or in open ground cultivation.

**Element List**

| | | | | | |
|---|---|---|---|---|---|
| 101. | Tank, Master Tank | 113. | Planter/Pot | 125. | Tank's Top Section |
| 102. | Slave Tank | 114. | Bedding Material | 126. | Tank's Bottom Section |
| 103. | Cap | 115. | Plant | 127. | O-ring/Gasket |
| 104. | Pipe Nipple | 116. | Fluid Jumper Pipe | 128. | Direct Irrigation Stake |
| 105. | Air Breather | 117. | Air Equalizing Pipe | 129. | Piped irrigation Stake |
| 106. | Fluid Infill Opening | 118. | Extender Pipe | 130. | Stake Pipe |
| 107. | Additive Basket | 119. | Stake Tip | 131. | Power Source |
| 108. | Fluid | 120. | Fluid Outlet Opening | 132. | Processor |
| 109. | Weight | 121. | Tank's Side Wall | 133. | Communication Device |
| 110. | Wick | 122. | Tree | 134. | Photovoltaic Panel |
| 111. | Coupler | 123. | Flower/Shrub | 135. | Audio Device |
| 112. | Tank Extender | 124. | Valve | 136. | Visual Indicator |
| 137. | Code | 167. | Power Storage/ Supply | 194. | L Piped Stake Stiffener |
| 138. | Stake Structure | 168. | Antenna | 195. | L Piped Stake Leader |
| 139. | Root Base | 169. | Top of Grade | 196. | L Stake Wick Channel |
| 140. | Fluid Depth Gauge/Sensor | 170. | Fluid Conveyance Pipe | 197. | L Stake Pipe Opening |
| 141. | Ledge/Protrusion | 171. | Direct Stake Base | 198. | Anti-root Barrier |
| 142. | Filter | 172. | Direct Stake Mount | 199. | Anti- Virus-Bacteria-Pest |
| 143. | Additive Capsule | 173. | Stake Rib Stiffener | 203. | Cap |
| 144. | Hanging Bar/Rod/Cord | 174. | Wick Channel | 205. | Air Breather |
| 145. | Hanging Ring | 175. | Direct Stake Top Surface | 208. | Fluid |
| 146. | Perforated Basket Wall | 176. | Nutrient | 211. | Coupler |
| 147. | Basket Cover | 177. | Anti- Virus-Bacteria-Pest | 214. | Soil/Bedding Material |
| 148. | Cap Device Cover | 178. | Anti-root Barrier | 224. | Valve |
| 149. | Outlet Module Coupler | 179. | Stake Rib | 227. | Gasket/O-ring |
| 150. | Flow Outlet Module | 180. | Irrigation Tank Assembly | 232. | Processor |
| 151. | Light Sources | 181. | Short/Medium Stake (S/M) | 233. | Communication Device |
| 152. | Nipple Cover | | | 234. | Photovoltaic Panel |
| 153. | Alignment Notch | 182. | Stake Pipe Entry | 240. | Sensor |
| 154. | Ring Protrusion | 183. | S/M Stake Top Surface | 256. | Infill Pipe |
| 155. | Top Surface | 184. | S/M Piped Stake Base | 263. | Base Unit Retainer |
| 156. | Infill Pipe | 185. | S/M Piped Stake Rib | 264. | Remote Power Source |
| 157. | Nipple (Infill Pipe) | 186. | S/M Piped Stake Stiffener | 265. | Base Unit |
| 158. | Top Wall | 187. | S/M Piped Stake Tip | 266. | Power Entry Port |
| 159. | Float Valve Leader | 188. | Wick Channel | 267. | Power Storage/ Supply |
| 160. | Openings (Irrigation Pipe) | 189. | Anti-root Barrier | 268. | Antenna |
| 161. | Draining Hole | 190. | Long Piped Assembly (L) | 269. | Top of Grade |
| 162. | Plug | 191. | L Piped Stake Top Surface | 270. | Fluid Conveyance Pipe |
| 163. | Base Unit Retainer | 192. | L Piped Stake Tip | | |
| 165. | Base Unit | 193. | L Piped Stake Rib | | |

## Claims

1. An irrigation system comprising an external pipe configured to convey irrigation fluid to an irrigation tank, and a plurality of irrigation stakes that are configured to receive the irrigation fluid from the irrigation tank and convey the irrigation fluid to soil/bedding material the vicinity of a plant root base, wherein:
irrigation fluid supplied to the irrigation tank is under pressure;
a valve coupled to a base unit is configured to be controlled by a float, whereby irrigation fluid entering the irrigation tank elevates the float, and when the float reaches a threshold level the valve coupled to the float stops the flow of irrigation fluid to the irrigation tank;
irrigation fluid from the irrigation tank is conveyed by capillary action to the plurality of irrigation stakes, the irrigation stakes being directly coupled to the irrigation tank and/or embedded in the soil/bedding material in the vicinity of the irrigation tank;
emitting side/s of the irrigation stakes are configured to substantially vertically align with the specific plant material root base they are configured to irrigate; and
irrigation fluid dispensed through the irrigation stakes is at least in response to diminishing moisture content in the soil/bedding material caused by a plant root in the vicinity of the plant root base.

2. The irrigation system of claim 1, wherein the irrigation fluid is conveyed from the irrigation tank by a wick, and wherein at least a section of the wick is covered by at least one of a perforated lining comprising copper oxide and wicking fabric.

3. The irrigation system of claim 1, wherein a plant triggers the flow of irrigation fluid through an irrigation stake to the soil/plant bedding material in the vicinity of a plant root base is triggered by a plant.

4. The irrigation system of claim 3, wherein the rate of replenishment of irrigation fluid in the irrigation tank is determined by at least one of a plant seasonal growth cycle and plant age.

5. The irrigation system of claim 1, wherein a wick originating from inside the irrigation tank extends upwardly above the irrigation fluid in the tank and terminates inside a section of a coupled irrigation stake.

6. The irrigation system of claim 1, wherein the irrigation tank is configured to be embedded below the surface of the soil/bedding material and wherein an air breather is coupled to the irrigation tank infill pipe to equalize air pressure inside the irrigation tank.

7. The irrigation system of claim 1, wherein the system comprises a plurality of coupled irrigation tanks, and wherein the coupled tanks are configured to receive irrigation fluid through at least one jumper pipe.

8. The irrigation system of claim 1, wherein the base unit couples at least one of an infill pipe and a cap.

9. The irrigation system of claim 1, wherein the base unit is detachable.

10. The irrigation system of claim 1, wherein at least one of a plant nutrient and a plant health substance is coupled to at least a portion of the irrigation stakes.

11. The irrigation system of claim 10, wherein the plant health substance is configured to be activated by at least one of time release and making contact with the irrigation fluid.
The irrigation system of claim 1, wherein an irrigation stake pipe is configured to be detachable in a proximity of a pipe entry to the irrigation stake.

12. The irrigation system of claim 1, wherein the irrigation tank is provided with a plugged drain.

13. The irrigation system of claim 1, wherein irrigation fluid is configured to egress the irrigation tank through the infill pipe in the event of a valve failure.

14. The irrigation system of claim 1, wherein the irrigation system is configured to be used in indoors or outdoors environments.

15. Use of an irrigation system according to claim 1 in a planter, a greenhouse or in open ground cultivation.
